Europäisches Patentamt

(19) European Patent Office

Office européen des brevets

(11) Publication number: **0 155 183**
A2

(12) **EUROPEAN PATENT APPLICATION**

(21) Application number: 85301745.7

(22) Date of filing: 13.03.85

(51) Int. Cl.⁴: **G 06 F 15/72**

(30) Priority: 14.03.84 JP 48489/84

(43) Date of publication of application: 18.09.85
Bulletin 85/38

(84) Designated Contracting States: DE FR GB

(71) Applicant: **Yamaguchi, Fujio, 733-55 Kokura, Kasuga-shi Fukuoka (JP)**
Applicant: **SEIKO INSTRUMENTS & ELECTRONICS LTD., 31-1, Kameido 6-chome, Koto-ku Tokyo (JP)**

(72) Inventor: **Yamaguchi, Fujio, 733-55 Kokura, Kasuga-shi Fukuoka (JP)**

(74) Representative: **Caro, William Egerton et al, J. MILLER & CO. Lincoln House 296-302 High Holborn, London WC1V 7JH (GB)**

(54) **Geometric processing apparatus.**

(57) A geometric processing apparatus comprises a data converter unit (1) for dividing a plane forming a graphic model into a plurality of triangles $(T_O, T_A)$ by diagonal lines drawn from a vertex thereof, and for producing vertex coordinates of the triangles, a normal vector operation unit (2) for receiving the data from the data converter unit and finding normal vectors moving outwards of the triangles and infinity point coordinates thereof, an interference test operation unit for calculating values of $4 \times 4$ determinants as well as logic values of the determinants, and an interference point coordinate calculation unit (4) for operating the result of the interference test operation unit. The arrangement is such that, in operation, vertex coordinates of two triangles are extracted from the graphic model for determining the interference condition and infinity point coordinates thereof, are selected to define a triangle, a $4 \times 4$ determinant is constituted by a vertex coordinate of the triangle and by a coordinate of another given point, the $4 \times 4$ determinant is operated by the interference test operation unit, and the interference point coordinate calculation unit is operated based upon the results of the interference test operating unit.

HOST COMPUTER

DATA CONVERTER UNIT 1 → INTERFERENCE TEST OPERATION UNIT → INTERFERENCE POINT CALCULATION UNIT 3 → 4 → OUTPUT UNIT FOR INTERFERENCE CONDITION 5

OPERATING UNIT FOR NORMAL VECTOR POINTING OUTWARDS 2

-1-

GEOMETRIC PROCESSING APPARATUS

This invention relates to geometric processing apparatus that is, for example, adapted to graphic output and modelling systems. More particularly, the present invention relates to a geometric processing apparatus for detecting interference condition among figures.

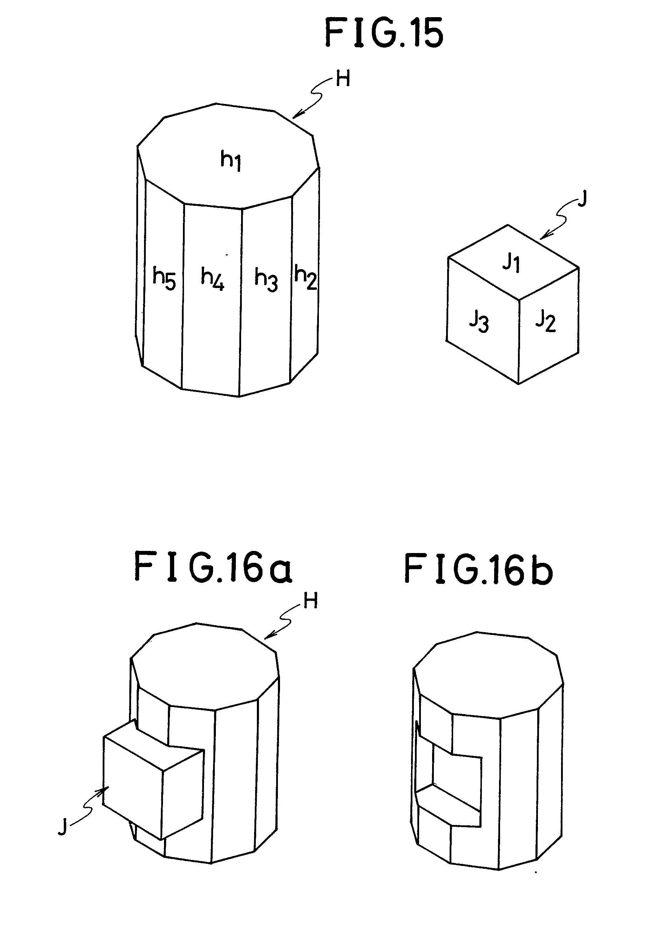

There has been a desire to display precisely desired figures since the widespread adoption of computer aided design (CAD) or computer aided manufacture (CAM) and a so-called polyhedron approximated solid model has been employed by modelling figures H and J to be displayed as shown in Figure 15 by using planes $h_1$, $h_2$, $h_3$, $h_4$, $h_5$, $h_6$, ... and $j_1$, $j_2$, $j_3$, $j_4$, ...

In a graphic output or modelling system used for CAD, CAM or for the production of animation, it has been attempted to constitute a new figure by adding the two independent graphic models or figures H and J together (Fig. 16(a)) or by subtracting the two independent figures H and J (Fig. 16(b)). In reconfigurating the figures, it is important to grasp the overlapping or interference condition of the individual figures.

Up until now interference among the graphic models has been examined by calculating each of the models using functions that represent boundary planes constituting the models. Complex computation is required, and the operation has to be carried out on a large scale.

The present invention seeks to provide a geometric processing aparatus which is capable of uniformly determining the interference of figures that are represented by sets of planes.

According to the present invention there is provided a geometric processing apparatus characterised by comprising: a data converter means for dividing a plane forming a graphic model into a plurality of triangles $(T_O, T_A)$ by diagonal lines drawn from a vertex thereof, and for producing vertex coordinates of the triangles; a normal vector operation means for receiving data from said data converter means and finding normal vectors pointing outwards of said triangles and infinity point coordinates thereof; an interference test operation means for calculating values of 4 x 4 determinants as well as logic values of the determinants; and interference point coordinate calculation means for operating on the result of said interference test operation means, the arrangement being such that, in operation, vertex coordinates of two triangles extracted from the graphic model for determining the interference condition and infinity point coordinates thereof, are selected to define a triangle, a 4 x 4 determinant is constituted by a vertex coordinate of said triangle and by a coordinate of another given point, said 4 x 4 determinant is operated by said interference test operation means and said interference point coordinate calculation means is operated based upon the result of the interference test operating means.

The interference test operation means may comprise a first determinant operation unit for examining the relation between two planes that include the triangles.

The interference test operation means may further comprise a second determinant operation unit for determining whether the two triangles which exist on the same plane interfere with each other.

The interference test operation means preferably comprises a third determinant operation unit for determining, when a plane including a first triangle interferes with a plane including a second triangle in the three-dimensional manner, whether the first and second triangles interfere with each other.

In the preferred embodiment the interference test operation means comprises a fourth determinant operation unit for determining whether the first triangle interferes with a side of the second triangle.

Further, there may be provided interference test operation means comprising a fifth determinant operation unit for determining whether the first triangle interferes with a line segment that does not exist on the plane which includes the first triangle.

The invention is illustrated, merely by way of example, in the accompanying drawings, in which:-

Figure 1 is a block diagram of one embodiment of a geometric processing apparatus according to the present invention;

Figure 2 is a block diagram of an interference test operation device used in the apparatus of Figure 1;

Figures 3 to 12 are flow charts illustrating the operation of the apparatus of Figure 1;

Figure 13 is a diagram which illustrates the division of figures by a geometric processing apparatus according to the present invention;

Figure 14 is a diagram for defining triangles that will be operated upon by geometric processing apparatus according to the present invention;

Figure 15 is a perspective view showing examples approximated to polyhedrons; and

Figure 16 is a diagram showing examples of synthesised figures.

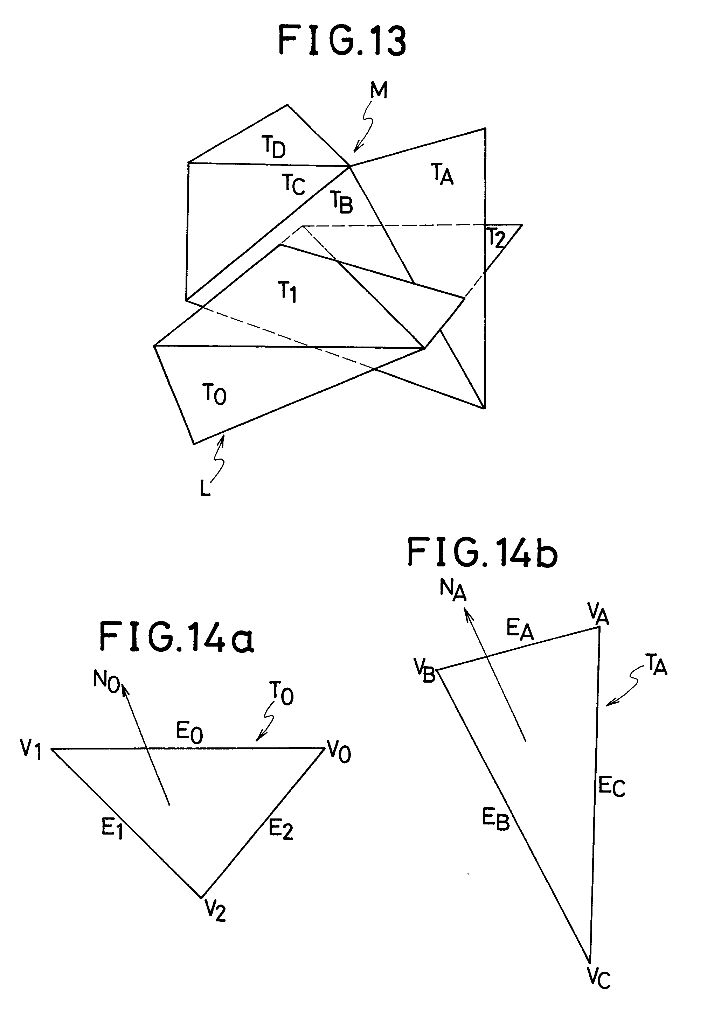

Referring first to Figure 13 there is shown the division of figures by a geometric processing apparatus according to the present invention. First, boundary planes L, M forming polygons that represnt figures are, respectively, divided into triangles $T_0$, $T_1$, $T_2$, ... and $T_A$, $T_B$, $T_C$, ... with their vertex as a starting point and other vertices as ending points. If the triangle $T_0$ representing one figure is regarded as a major triangle, the triangle $T_A$ representing another figure is regarded as a dependent triangle, and whether the two figures interfere with each other or not is determined by calculating 4 x 4 determinants. When they interfere, coordinates of the interference points are determined.

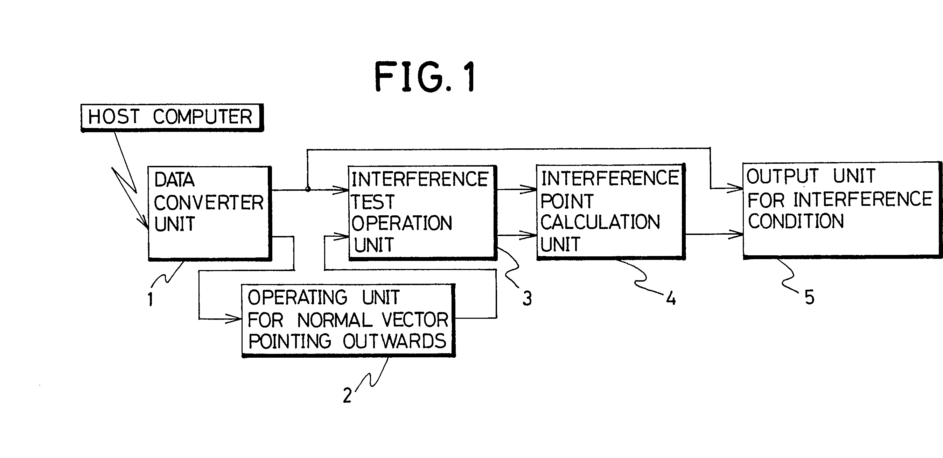

Figure 1 is a block diagram of one embodiment of a geometric processing apparatus according to the present invention. A data converter circuit 1 divides a polygon (Fig. 13) which defines an approximated polyhedron, into triangles by diagonal lines, and

0155183

-4-

forms coordinates $V_0 = (x_0, y_0, z_0)$, $V_1 = (x_1, y_1, z_1)$, $V_2 = (x_2, y_2, z_2)$ and $V_A = (x_A, y_A, z_A)$, $V_B = (x_B, y_B, z_B)$, $V_C = (x_C, y_C, z_C)$ of three vertices of each of the two triangles $T_0, T_A$, the interference of which is to be investigated as shown in Figure 14, and that produces outputs to an input data table (Table 1).

<u>Table 1</u>

| Triangle $T_0$ | Vertex $V_0$ | $x_0$ | | Triangle $T_A$ | Vertex $V_A$ | $x_A$ | |
|---|---|---|---|---|---|---|---|
| | | $y_0$ | | | | $y_A$ | |
| | | $z_0$ | | | | $z_A$ | |
| | Vertex $V_1$ | $x_1$ | | | Vertex $V_B$ | $x_B$ | |
| | | $y_1$ | | | | $y_B$ | |
| | | $z_1$ | | | | $z_B$ | |
| | Vertex $V_2$ | $x_2$ | | | Vertex $V_C$ | $x_C$ | |
| | | $y_2$ | | | | $y_C$ | |
| | | $z_2$ | | | | $z_C$ | |

An operating unit 2 for operating normal vector pointing outwards uses data of vertex coordinates from the data converter unit 1, finds the areas of the triangles, finds the vectors that represent the directions of triangles with the side toward the reader as the positive direction when the vertices are followed in the counterclockwise direction, i.e., finds normal vectors pointing outwards of the triangles

$$N = [n_X, n_Y, n_Z]$$

where

$$n_X = \begin{vmatrix} y_0 & z_0 & 1 \\ y_1 & z_1 & 1 \\ y_2 & z_2 & 1 \end{vmatrix}$$

-5-

$$n_Y = \begin{vmatrix} z_0 & x_0 & 1 \\ z_1 & x_1 & 1 \\ z_2 & x_2 & 1 \end{vmatrix}$$

$$n_Z = \begin{vmatrix} x_0 & y_0 & 1 \\ x_1 & y_1 & 1 \\ x_2 & y_2 & 1 \end{vmatrix}$$

and finds homogeneous coordinates $[n_X, n_Y, n_Z, 0]$ of points at infinity in the direction of the normal vector pointing outwards.

Reference numeral 3 denotes an interference test operation unit which, based upon the vertex data of triangles and normal vectors pointing outwards, determines the interference condition among the interior of triangles, sides and vertices relying upon the 4 x 4 determinant, which writes the interference condition onto an interference condition table (Table 2), and which, when they interfere simultaneously, requests an interference point coordinate calculation unit 4 to calculate interference point coordinates.

Table 2

| | | | Triangle | | | | | | |
| | | | Sides | | | Vertices | | | |
| | | | $T_A$ | $E_A$ | $E_B$ | $E_C$ | $V_A$ | $V_B$ | $V_C$ |
|---|---|---|---|---|---|---|---|---|---|
| Triangle | Sides | $T_0$ | | | | | | | |
| | | $E_0$ | | | | | | | |
| | | $E_1$ | | | | | | | |
| | | $E_2$ | | | | | | | |
| | Vertices | $V_0$ | | | | | | | |
| | | $V_1$ | | | | | | | |
| | | $V_2$ | | | | | | | |

The principle for operating the interference test operation unit 3 will now be described. A 4 x 4 determinant

$$\begin{vmatrix} x_A & y_A & z_A & 1 \\ x_0 & y_0 & z_0 & 1 \\ x_1 & y_1 & z_1 & 1 \\ x_2 & y_2 & z_2 & 1 \end{vmatrix} \qquad \ldots (1)$$

is constituted for a plane that includes three points $V_0 = (x_0, y_0, z_0)$, $V_1 = (x_1, y_1, z_1)$ and $V_2 = (x_2, y_2, z_2)$ and for a given point $V_A = (x_A, y_A, z_A)$ and three-dimensional space (the determinant representing the relation between the point $V_A$ and the triangle $T_0$ defined by vertices $V_0$, $V_1$, $V_2$ is hereby referred to as $S_{A012}$).

If the result of the operation is (a) $S_{A012} = 0$, the point $V_A$ exists on a plane that includes the triangle $T_0$, (b) if the result is $S_{A012} > 0$, the point $V_A$ exists above the plane that includes the triangle $T_0$, and (c) if the result is $S_{A012} < 0$, the point $V_A$ exists below the plane that includes the triangle $T_0$.

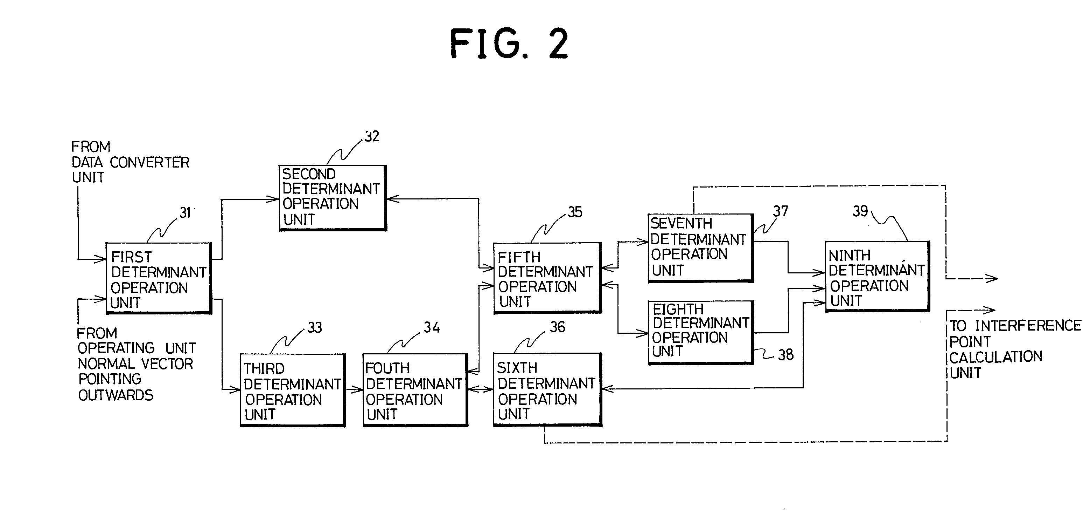

Figure 2 is a block diagram of the interference test operation unit 3. A first determinant operation unit 31 examines the relation between two planes that include triangles. The first determinant operation unit 31 constitutes a determinant which is given by determinant (1) above in order to determine whether three vertices $V_A$, $V_B$ and $V_C$ of the triangle $T_A$ exist on the plane which include the triangle $T_0$, and whether vertices $V_0$, $V_1$ and $V_2$ of the triangle $T_0$ exist on the plane that includes the triangle $T_A$, based upon three vertices $V_0$, $V_1$, $V_2$ and three vertices $V_A$, $V_B$, $V_C$ of the triangles $T_0$ and $T_A$. The first determinant operation unit 31 examines whether the following condition:

$$\left\{ (S_{A012} = 0) \wedge (S_{B012} = 0) \wedge (S_{C012} = 0) \right\} \wedge$$

$$\left\{ (S_{0ABC} = 0) \wedge (S_{1ABC} = 0) \wedge (S_{2ABC} = 0) \right\} \wedge \qquad \ldots (2)$$

holds true relying upon the 4 x 4 determinants. When the above condition holds true, the first determinant operation unit 31 determines that the two triangles $T_0$, $T_A$ exist on the same plane, and direct data to a second determinant operation unit 32. When the above condition does not hold true, the first determinant operation unit 31 determines that the planes which include triangles interfere with each other in a three-dimensional manner, and sends data to a third determinant operation unit 33. The second determinant operation unit 32 determines whether the two triangles $T_0$ and $T_A$ that exist on the same plane interfere with each other, i.e. whether they overlap at least partially or not. The second determinant operation unit 32 sends data relating to three sides $E_0$, $E_1$, $E_2$ and vertices $V_0$, $V_1$, $V_2$ of the triangle $T_0$, and the data related to three sides $E_A$, $E_B$, $E_C$ and vertices $V_A$, $V_B$, $V_C$ of the triangle $T_A$ to a fifth determinant operation unit 35 which determines whether the two triangles $T_0$, $T_A$ interfere with each other on a plane. The determined results are sent to the interference condition table (Table 2).

The third determinant operation unit 33, when a plane including the triangle $T_0$ interferes with a plane that includes the triangle $T_A$ in a three-dimensional manner, determines whether the triangle $T_0$ and the triangle $T_A$ interfere with each other or not. The third determinant operation unit 33 sends data relating to the three sides $E_0$, $E_1$, $E_2$ and end points $V_0$, $V_1$, $V_2$ of the triangle $T_0$, and the data relating to the three sides $E_A$, $E_B$, $E_C$ and end points $V_A$, $V_B$, $V_C$ of the triangle $T_A$ to a fourth determinant operation unit 34 which determines whether the two triangles $T_0$ and $T_A$ interfere with each other or not. The thus determined results are sent to the interference condition table (Table 2).

The fourth determinant operation unit 34 determines whether the triangle $T_0$ interferes with a line segment that exists independently of the triangle, ie. whether the triangle $T_0$ interferes with the side $E_A$ of the triangle $T_A$. The fourth determinant operation unit 34 determines whether a starting point coordinate

$V_A$ and an ending point coordinate $V_B$ of the side $E_A$ establish the following condition

$$(S_{A012} = 0) \bigwedge (S_{B012} = 0) \quad \ldots \text{ (3)}$$

for the triangle $T_0$, relying upon the 4 x 4 determinants. When the above condition holds true, the fourth determinant operation unit 34 determines that they are on the same plane, and transfers the data to the fifth determinant operation unit 35. When the above condition does not hold true, the fourth determinant operation unit 34 determines that they are not on the same plane, and transfers the data to a sixth determinant operation unit 36 and, at the same time, sends the determined results to the third determinant operation unit 33.

The fifth determinant operation unit 35 examines the relation between the triangle $T_0$ and the side $E_A$ that exists on a plane that includes the triangle $T_0$. The fifth determinant operation unit 35 expands the triangle $T_0$ into three sides $E_0$, $E_1$, $E_2$, transfers the data to a seventh determinant operation unit 37 to have the latter determine whether the sides $E_0$, $E_1$, $E_2$ interfere with the side $E_A$ of the triangle $T_A$ or not, and, at the same time, transfers the data to an eighth determinant operation unit 38 to have the latter determine whether the coordinates $V_A$, $V_B$ of the side $E_A$ exist inside the triangle $T_0$ or not. Based upon the operating results of the seventh and eighth determinant operation units 37,38, the interference condition of the triangle $T_0$ and $T_A$ is determined, and the determined results are sent to the interference condition table (Table 2) and to the second and fourth determinant operation units 32,34.

The sixth determinant operation unit determines whether the triangle $T_0$ interferes with the line segment $E_A$ that does not exist on the plane which includes the triangle $T_0$. The sixth determinant operation unit 36 determines whether a starting point exists on one side of the plane which includes the triangle $T_0$, an ending point exists on the other side, and whether either the ending point or the starting point exist inside the space defined by three planes formed by the starting point or the ending point of the segment and by two vertices of the triangle. The sixth determinant operation unit 36 determines whether the following condition

$$\left\{(S_{A012} \geq 0) \wedge (S_{B012} \leq 0) \wedge (S_{B01A} \leq 0) \wedge (S_{B12A} \leq 0) \wedge (S_{B20A} \leq 0)\right\} \vee \left\{(S_{B012} \leq 0) \wedge (S_{A012} \leq 0) \wedge (S_{A01B} \leq 0) \wedge (S_{A12B} \leq 0) \wedge (S_{A20B} \leq 0)\right\} \quad \dots\dots (4)$$

holds true or not, relying upon the 4 x 4 determinants. When the above relation holds true, the sixth determinant operation unit 36 determines that the triangle $T_0$ interferes with the line segment $E_A$, and produces the determined results to the interference condition table and further requests, at the same time, the interference point calculation unit 4 to calculate the coordinates of interference points.

The seventh determinant operation unit 37 determines whether two line segments that exist on the same plane interfere with each other or not. The seventh determinant operation unit 37 assumes two triangles under the conditions where the line segment $E_A$ is defined by two end points $V_A$, $V_B$, the line segment $E_0$ is defined by two end points $V_0$, $V_1$, one line segment serves as a side, and end points of the other line segment serve as vertices, and determines whether the following condition

$$[\left\{(S_{N01A} \geq 0) \wedge (S_{N01B} \leq 0)\right\} \vee \left\{(S_{N01A} \leq 0) \wedge (S_{N01B} \geq 0)\right\}] \wedge [\left\{(S_{NAB0} \geq 0) \wedge (S_{NAB1} \leq 0)\right\} \vee \left\{(S_{NAB0} \leq 0) \wedge (S_{NAB1} \geq 0)\right\}] \quad \dots (5)$$

holds true, relying upon the 4 x 4 determinants. When the above condition holds true, the seventh determinant operation unit 37 determines that the two line segment interfere with each other on a plane, and requests the interference point calculation unit 4 to calculate the coordinate of the interference point and, at the same time, sends the determined result to the interference condition table and to the fifth determinant operation unit 35.

The eighth determinant operation unit 38 determines whether a point $V_A$ that exists on a plane which includes a triangle is located inside or outside the triangle $T_0$. The eighth determinant operation unit 38 assumes a triangle formed by the point $V_A$ and the sides $E_0$, $E_1$, $E_2$ of the triangle $T_0$, and determines whether the following condition

$$(S_{N01A} \geqq 0) \bigwedge (S_{N12A} \geqq 0) \bigwedge (S_{N20A} \geqq 0) \quad \cdots \quad (6)$$

holds true, relying upon the 4 x 4 determinants. When the above condition holds true, the eighth determinant operation unit 38 determines that the point exists inside the triangle. When the above condition does not hold true, the eighth determinant operation 38 determines that the point exists outside the triangle, and sends the determined results to the interference condition table and to the fifth determinant operation unit 35.

A ninth determinant operation unit 39 determines in what relation a point exists with respect to a plane which includes a triangle. The ninth determinant operation unit 39 determines the following conditions

$$\begin{aligned} &\text{(a)} \quad S_{A012} > 0 \\ &\text{(b)} \quad S_{A012} = 0 \qquad \cdots \cdots (7) \\ &\text{(c)} \quad S_{A012} < 0 \end{aligned}$$

with respect to the triangle and the point, relying upon the 4 x 4 determinants. If the condition (a) holds true, the ninth determinant operation unit 39 determines that the point exists above the plane, if the condition (b) holds true the ninth determinant operation unit 39 determines that the point exists on the plane, and if the condition (c) holds true the ninth determinant operation unit 39 determines that the point exists below the plane. The ninth determinant operation unit 39 then sends the determined results to the interference condition table (Table 2) and to the sixth, seventh and eighth determinant operation units 36,37,38. The ninth determinant operation unit 39 further determines whether the vertex of the original figure is convex or concave, i.e., calculates the conditions

(a') $S_{N012} > 0$

(b') $S_{N012} = 0$

(c') $S_{N012} < 0$

with regard to a vertex (e.g. $V_1$) of a polygon and the neighbouring two vertices (e.g. $V_0$, $V_2$). If the condition (a') holds true, the ninth determinant operation unit 39 determines that the vertex is convex, if the condition (b') holds true, the ninth determinant operation unit 39 determines that the vertex is linear, and if the condition (c') holds true, the ninth determinant operation unit 39 determines that the vertex is concave.

Reverting to Figure 1, the interference point coordinate calculation unit 4 performs the operation in accordance with an equation

$$P = V_A + (V_B - V_A) \times S_{A012} / (S_{A012} - S_{B012}) \quad \cdots\cdots\cdots\cdots (8)$$

for the request of interference point calculation from the seventh determinant operation unit 37, and which performs the operation in accordance with the equation

$$P = V_A + (V_B - V_A) \times S_{N01A} / (S_{N01A} - S_{N01B})$$
$$= V_0 + (V_1 - V_0) \times S_{NAB0} / (S_{NAB0} - S_{NAB1}) \quad \ldots\ldots\ldots\ldots (9)$$

for the request from the sixth determinant operation unit 36, in order to find interference point coordinate P (x, y, z). The intereference point coordinate calculation unit 4 then sends outputs to an interference point coordinate table (Table 3).

Table 3

|  | $T_A$ | $E_A$ | $E_B$ | $E_C$ |
|---|---|---|---|---|
| $T_0$ | ✕ |  |  |  |
| $E_0$ |  |  |  |  |
| $E_1$ |  |  |  |  |
| $E_2$ |  |  |  |  |

An output unit 5 produces data of the interference condition, and stores outputs from the interference test operation unit 3 and from the interference point coordinate calculation unit 4 in the interference condition table and in the interference point coordinate table. The output unit 5 further stores in an arranged manner the volume of a tetrahedron formed by a triangle incidentally calculated through the step of operation and by another point as well as unit normal vectors pointing outwards in a characteristics value table (Table 4).

Table 4

| | $T_0$ | $T_A$ |
|---|---|---|
| A | | |
| V | ' | |
| N | | |
| | | |
| | | |

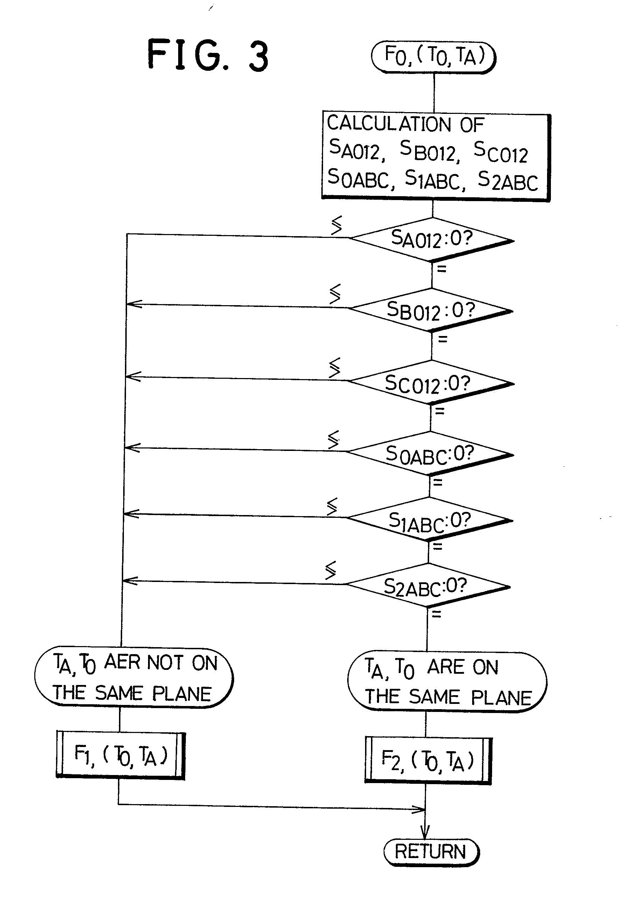

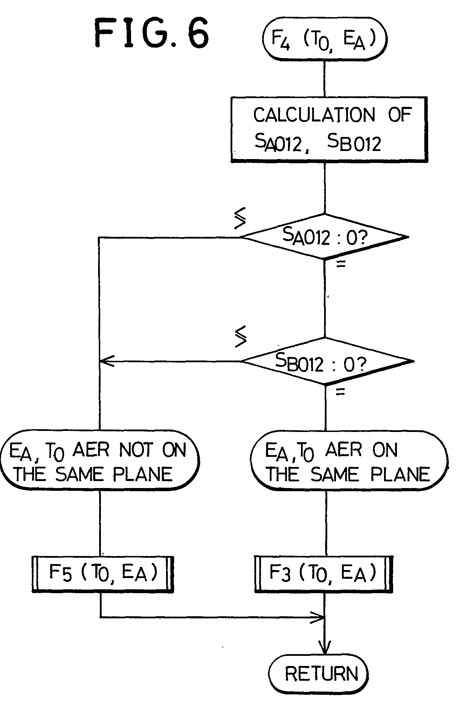

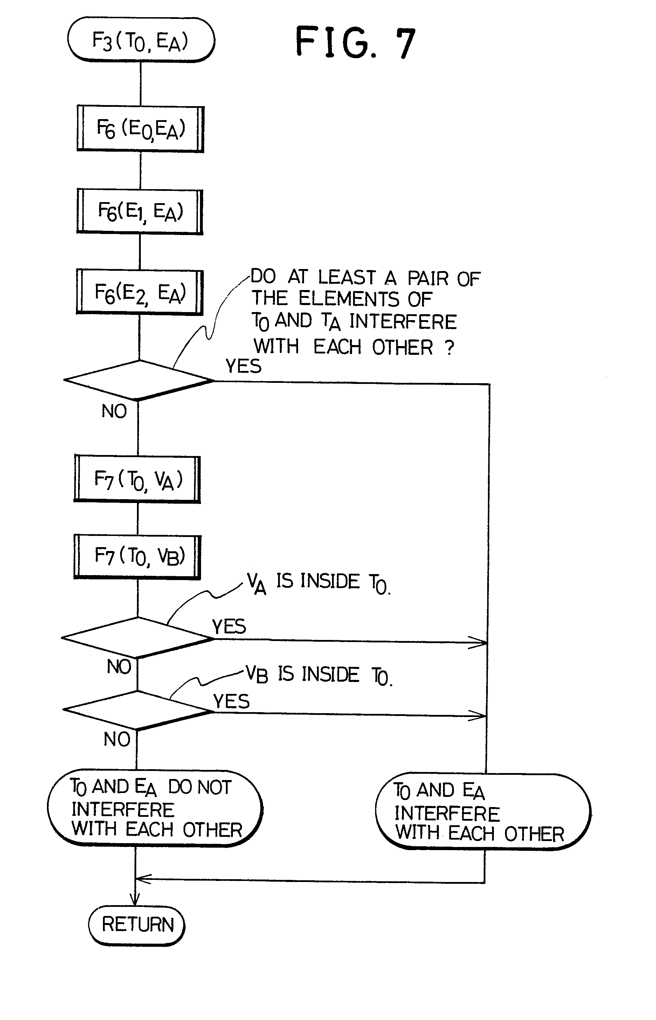

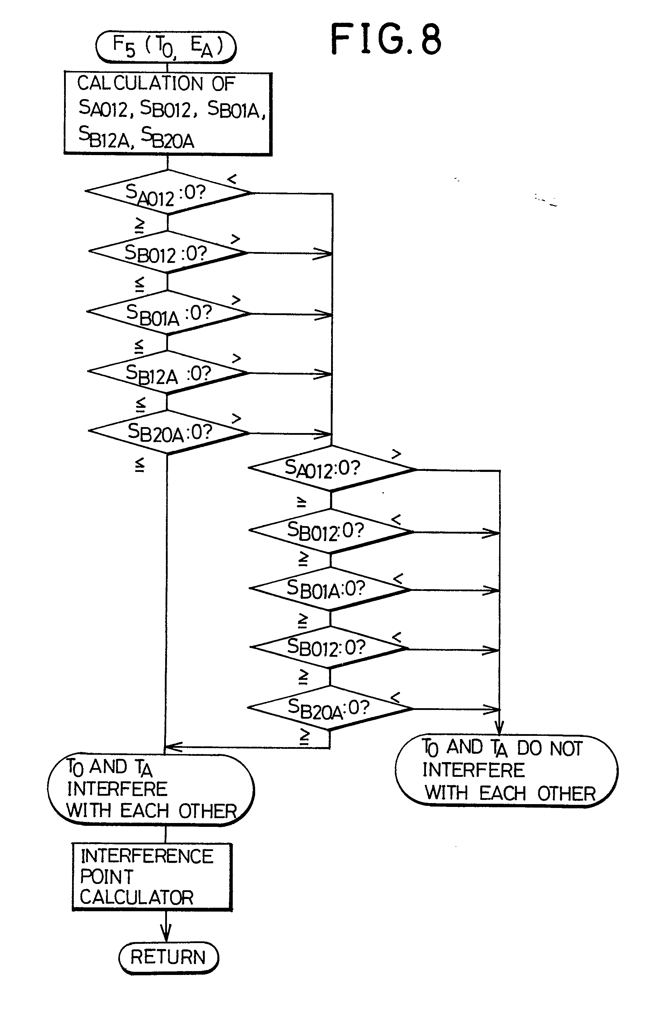

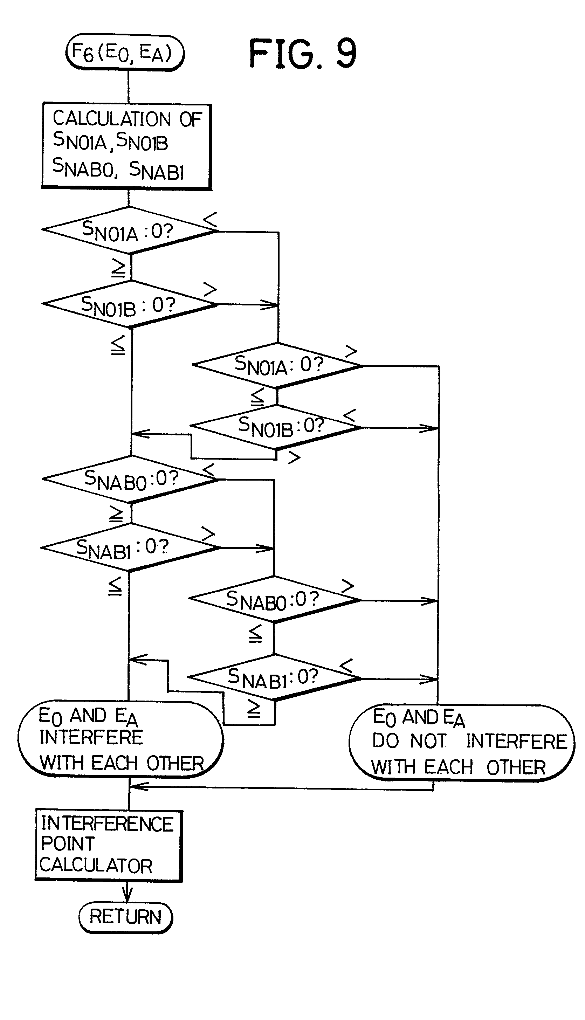

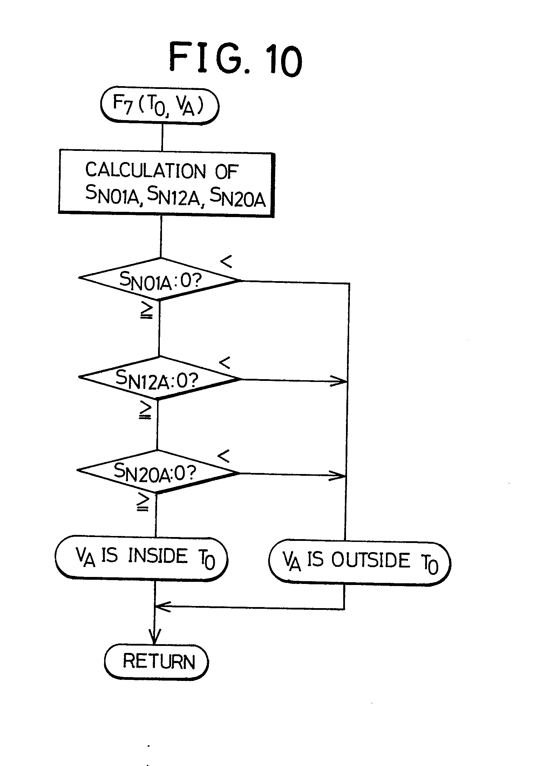

Operation of the thus constructed geometric processing apparatus will be described below in conjunction with flow charts shown in Figures 3 to 12.

Upon receipt of data representing two models having an interference condition which is to be examined, the data converter unit 1 divides the respective models into a plurality of triangles by diagonal lines, to produce coordinate data of vertices $V_0$, $V_1$, $V_2$ and $V_A$, $V_B$, $V_C$ of the triangles $T_0$, $T_A$. Based upon the coordinate data, the operating unit 2, operates normal vectors $N_0$, $N_A$ pointing outwards and, at the same time, normalises the vector values to store them in the characteristic value table (Table 4). Upon receipt of data related to vertices $V_0$, $V_1$, $V_2$ and $V_A$, $V_B$, $V_C$ of triangles $T_0$, $T_A$, and outwardly pointing normal vectors $N_0$, $N_A$, the interference test operation unit 3 executes an interference test. Based upon the data of vertices $V_0$, $V_1$, $V_2$ and $V_A$, $V_B$, $V_C$, the first determinant operation unit 31 performs the operation in accordance with condition (2)

$$\left\{ (S_{A012} = 0) \wedge (S_{B012} = 0) \wedge (S_{C012} = 0) \right\} \wedge \left\{ (S_{0ABC} = 0) \wedge (S_{1ABC} = 0) \wedge (S_{2ABC} = 0) \right\}$$

When the above condition holds, the first determinant operation unit 31 determines that the triangles $T_0$ and $T_A$ exist on the same plane, and transfers the operation to the second determinant operation unit 32. When the above condition does not hold, the first determinant operation unit 31 determines that the triangles $T_0$ and $T_A$ do not exist on the same plane, and transfers the operation to the third determinant operation unit 33 (Figure 3).

I. When the triangles $T_0$ and $T_A$ exist on the same plane:

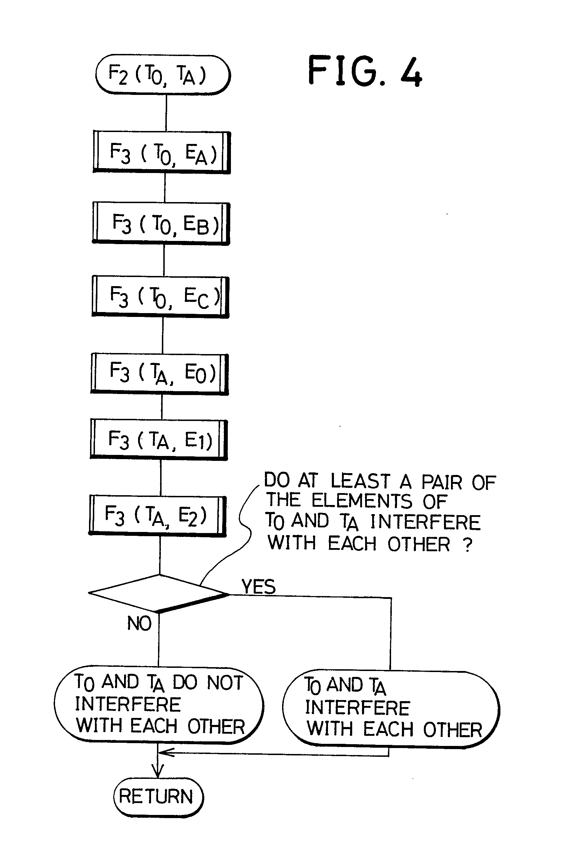

The second determinant operation unit 32 expands the triangle $T_0$ into three sides $E_0$, $E_1$, $E_2$ and vertices $V_0$, $V_1$, $V_2$, expands the triangle $T_A$ into three sides $E_A$, $E_B$, $E_C$ and vertices $V_A$, $V_B$, $V_C$, and once transfers the control to the fifth determinant operation unit 35. The fifth determinant operation unit 35 expands the triangle $T_0$ that is received from the second determinant operation unit 32 into three sides and transfers them to the seventh determinant operation unit 37. The fifth determinant operation unit 35 further expands the three sides $E_A$, $E_B$, $E_C$ into end points $V_A$, $V_B$, $V_C$, and transfers them to the eighth determinant operation unit 38. Based upon the sides $E_0$, $E_1$, $E_2$ and the sides $E_A$, $E_B$, $E_C$ of the two triangles $T_0$, $T_A$ that are received, the seventh determinant operation unit 37 determines whether the sides forming the triangles are interfering with each other. When the sides interfere, the seventh determinant operation unit 37 requests the interference point coordinate calculation unit 4 to calculate the interference point coordinates. The eighth determinant operation unit 38 determines whether the end points $V_A$, $V_B$, $V_C$ exist inside or outside the triangle $T_0$. The determined results of the seventh determinant operation unit 37 and of the eighth determinant operation unit 38 are sent to the fifth determinant operation unit 35 which determines whether the triangle $T_0$ interferes with the side $E_A$ of the triangle $T_A$. The thus determined result is sent to the second determinant operation unit 32 with determines whether the triangle $T_0$ and the triangle $T_A$ interfere with each other on the same plane (Figures 4, 7 and 9). The determined results are sent to the interference condition table (Table 2), and the interference point coordinates are sent to the interference point coordinate table (Table 3) and are stored therein respectively.

II. When the triangle $T_0$ and the triangle $T_A$ do not exist on the same plane.

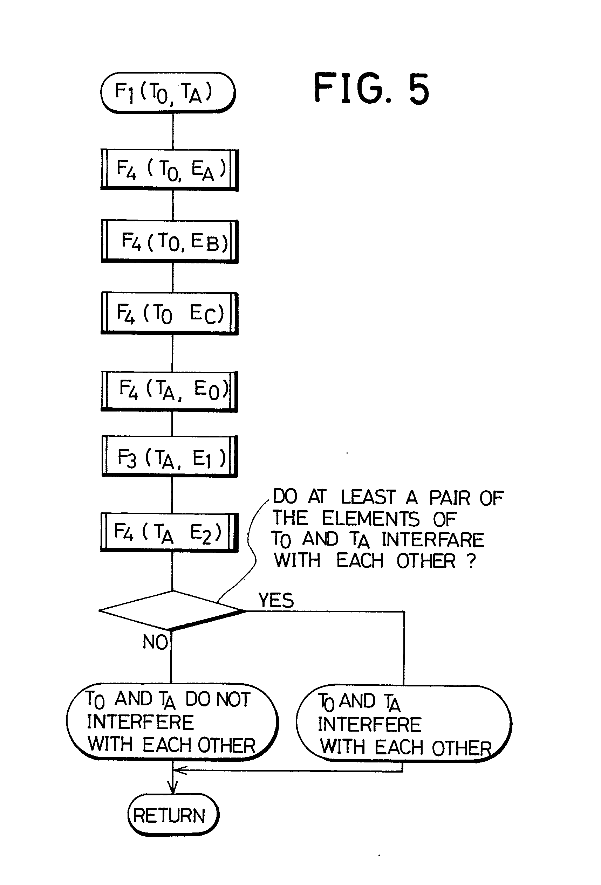

The third determinant operation unit 33 expands the triangle $T_0$ into three sides $E_0$, $E_1$, $E_2$ and vertices $V_0$, $V_1$, $V_2$, and once transfers the control to the fourth determinant operation unit 34 which determines whether the triangle $T_0$ that is received and the side $E_A$ of the triangle $T_A$ exist on the same plane or not. When they exist on the same plane, the fourth determinant operatin unit 34 transfers the control to the fifth determinant operation unit 35 which executes the interference test on the plane through the same steps as mentioned in I above. When the triangle $T_0$ and the side $E_A$ do not exist on the same plane, on the other hand, the fourth determinant operation unit 34 transfers the control to the sixth determinant operation unit 36 which determines whether the triangle $T_0$ and the side $E_A$ interfere in a three-dimensional manner or not. When it is determined that they interfere with each other in a three-dimensional manner, the sixth determinant operation unit 36 requests the interference point calculation unit 4 to calculate the coordinates of interference points. The determined results of the fifth and sixth determinant operation units 35,36 are sent again to the fourth determinant operation unit 34 which determines whether the triangle $T_0$ and the side $E_A$ interfere with each other or not. The determined result of the fourth determinant operation unit 34 is further sent to the third determinant operation unit 33 which determines whether the triangles $T_0$ and $T_A$ interfere with each other in a three-dimensional manner or not (Figures 5, 6 and 8). The determined results are sent to the interference condition table (Table 2), and coordinates of interference points are sent to the interference point coordinate table (Table 3), and are stored therein, respectively.

The operation steps (I) and (II) are then selectively adapted to the triangles divided by diagonal lines, in order to determine interference condition on all of the planes constituting figures.

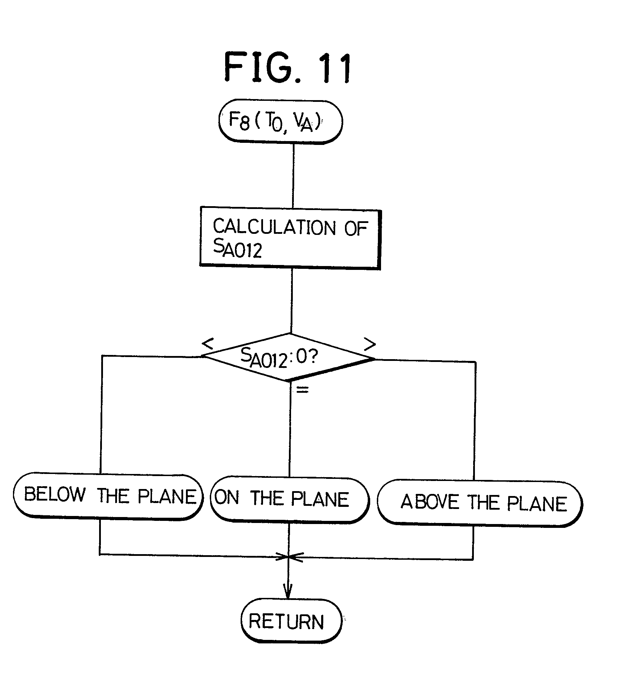

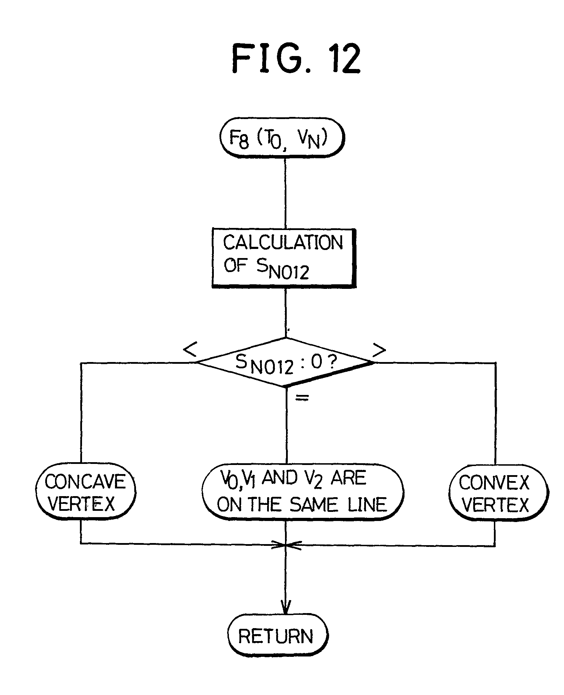

Based upon the data from the sixth, seventh and eighth determinant operation units 36,37,38, the ninth determinant operation unit 39 performs side tests (Figure 11) of points for a plane that includes triangles and performs concavity tests (Figure 12).

According to the geometric processing apparatus described above, figures of which the interference condition is to be investigated are divided into triangles by diagonal lines drawn from vertices thereof to obtain data related to the vertex coordinates thereof, normal vectors pointing outwards, and points at infinity of the vectors. Therefore, interference condition among complex figures can be determined through the uniform process relying upon the 4 x 4 determinant operation. Accordingly, a graphic processing operation can be executed simply and at high speeds, making it possible to form, analyze and display polyhedral models at high speeds and easily.

-17-

CLAIMS

1. A geometric processing apparatus characterised by comprising: a data converter means (1) for dividing a plane forming a graphic model into a plurality of triangles $(T_O, T_A)$ by diagonal lines drawn from a vertex thereof, and for producing vertex coordinates of the triangles; a normal vector operation means (2) for receiving data from said data converter means (1) and finding normal vectors pointing outwards of said triangles and infinity point coordinates thereof; an interference test operation means (3) for calculating values of 4 x 4 determinants as well as logic values of the determinants; and interference point coordinate calculation means (4) for operating on the result of said interference test operation means (3), the arrangement being such that, in operation, vertex coordinates of two triangles extracted from the graphic model for determining the interference condition and infinity point coordinates thereof, are selected to define a triangle, a 4 x 4 determinant is constituted by a vertex coordinate of said triangle and by a coordinate of another given point, said 4 x 4 determinant is operated by said interference test operation means (3) and said interference point coordinate calculation means (4) is operated based upon the result of the interference test operating means.

2. A geometric processing apparatus as claimed in claim 1 characterised in that the interference test operation means (3) comprises a first determinant operation unit (31) for examining the relation between two planes that include the triangles.

3. A geometric processing apparatus as claimed in claim 2 characterised in that the interference test operation means (3) comprises a second determinant operation unit (32) for determining whether the two triangles which exist on the same plane interfere with each other.

4. A geometric processing apparatus as claimed in claim 2 or 3 characterised in that the interference test operation means (3) comprises a third determinant operation unit (33) for determining,

0155183

-18-

when a plane including a first triangle interferes with a plane including a second triangle in the three-dimensional manner, whether the first and second triangles interfere with each other.

5. A geometric processing apparatus as claimed in claim 4 characterised in that the interference test operation means (3) comprises a fourth determinant operation unit (34) for determining whether the first triangle interferes with a side of the second triangle.

6. A geometric processing apparatus as claimed in claim 5 characterised in that the interference test operation means (3) comprises a fifth determinant operation unit (35) for determining whether the first triangle interferes with a line segment that does not exist on the plane which includes the first triangle.

7. A geometric processing system comprising: a data converter means which divides a plane forming a graphic model into one or a plurality of triangles by diagonal lines drawn from a vertex thereof, and which produces vertex coordinates of triangles; a normal vector operation means which, relying upon the data from said means, finds normal vectors pointing outwards from said triangles and point at infinity coordinates thereof; an interference test operation means which calculates values of 4 x 4 determinants as well as logic values of the determinants; and interference point coordinate calculation means which operates relying upon the operated result of said interference test operation means; wherein vertex coordinates of two triangles extracted from a figure for determining the interference condition and point at infinity coordinates thereof, are suitably selected to imagine a triangle, a 4 x 4 determinant is consituted by a vertex coordinate of said triangle and by a coordinate of another given point, said 4 x 4 determinant is operated by said operation means, and said interference point coordinate calculation means is operated based upon the operated result.

# FIG. 1

HOST COMPUTER

| DATA CONVERTER UNIT | INTERFERENCE TEST OPERATION UNIT | INTERFERENCE POINT CALCULATION UNIT | OUTPUT UNIT FOR INTERFERENCE CONDITION |

1

OPERATING UNIT FOR NORMAL VECTOR POINTING OUTWARDS

2

3

4

5

# FIG. 2

0155183

# FIG. 3

$F_0, (T_0, T_A)$

CALCULATION OF
$S_{A012}$, $S_{B012}$, $S_{C012}$
$S_{0ABC}$, $S_{1ABC}$, $S_{2ABC}$

$\leqq$ ── $S_{A012}:0?$ ── $=$

$\leqq$ ── $S_{B012}:0?$ ── $=$

$\leqq$ ── $S_{C012}:0?$ ── $=$

$\leqq$ ── $S_{0ABC}:0?$ ── $=$

$\leqq$ ── $S_{1ABC}:0?$ ── $=$

$\leqq$ ── $S_{2ABC}:0?$ ── $=$

$T_A, T_0$ AER NOT ON THE SAME PLANE

$T_A, T_0$ ARE ON THE SAME PLANE

$F_1, (T_0, T_A)$

$F_2, (T_0, T_A)$

RETURN

0155183

# FIG. 4

$F_2 (T_0, T_A)$

$F_3 (T_0, E_A)$

$F_3 (T_0, E_B)$

$F_3 (T_0, E_C)$

$F_3 (T_A, E_0)$

$F_3 (T_A, E_1)$

$F_3 (T_A, E_2)$

DO AT LEAST A PAIR OF THE ELEMENTS OF $T_0$ AND $T_A$ INTERFERE WITH EACH OTHER ?

YES

NO

$T_0$ AND $T_A$ DO NOT INTERFERE WITH EACH OTHER

$T_0$ AND $T_A$ INTERFERE WITH EACH OTHER

RETURN

0155183

# FIG. 5

$F_1(T_0, T_A)$

$F_4(T_0, E_A)$

$F_4(T_0, E_B)$

$F_4(T_0 \ E_C)$

$F_4(T_A, E_0)$

$F_3(T_A, E_1)$

$F_4(T_A \ E_2)$

DO AT LEAST A PAIR OF THE ELEMENTS OF $T_0$ AND $T_A$ INTERFARE WITH EACH OTHER ?

YES

NO

$T_0$ AND $T_A$ DO NOT INTERFERE WITH EACH OTHER

$T_0$ AND $T_A$ INTERFERE WITH EACH OTHER

RETURN

# FIG.6

$F_4 (T_0, E_A)$

CALCULATION OF
$S_{A012}, S_{B012}$

$\leqq$

$S_{A012} : 0?$

$=$

$\leqq$

$S_{B012} : 0?$

$=$

$E_A, T_0$ AER NOT ON
THE SAME PLANE

$E_A, T_0$ AER ON
THE SAME PLANE

$F_5 (T_0, E_A)$

$F_3 (T_0, E_A)$

RETURN

0155183

# FIG. 7

Flowchart:

- $F_3(T_0, E_A)$
- $F_6(E_0, E_A)$
- $F_6(E_1, E_A)$
- $F_6(E_2, E_A)$
- Decision: DO AT LEAST A PAIR OF THE ELEMENTS OF $T_0$ AND $T_A$ INTERFERE WITH EACH OTHER ? — YES / NO
- $F_7(T_0, V_A)$
- $F_7(T_0, V_B)$
- Decision: $V_A$ IS INSIDE $T_0$. — YES / NO
- Decision: $V_B$ IS INSIDE $T_0$. — YES / NO
- $T_0$ AND $E_A$ DO NOT INTERFERE WITH EACH OTHER
- $T_0$ AND $E_A$ INTERFERE WITH EACH OTHER
- RETURN

0155183

# FIG.8

$F_5 (T_0, E_A)$

CALCULATION OF
$S_{A012}$, $S_{B012}$, $S_{B01A}$,
$S_{B12A}$, $S_{B20A}$

$S_{A012} : 0?$   <

$\geq$

$S_{B012} : 0?$   >

$\leq$

$S_{B01A} : 0?$   >

$\leq$

$S_{B12A} : 0?$   >

$\leq$

$S_{B20A} : 0?$   >

$\leq$

$S_{A012} : 0?$   >

$\geq$

$S_{B012} : 0?$   <

$\geq$

$S_{B01A} : 0?$   <

$\geq$

$S_{B012} : 0?$   <

$\geq$

$S_{B20A} : 0?$   <

$\geq$

$T_0$ AND $T_A$ INTERFERE WITH EACH OTHER

$T_0$ AND $T_A$ DO NOT INTERFERE WITH EACH OTHER

INTERFERENCE POINT CALCULATOR

RETURN

# FIG. 9

$F_6(E_0, E_A)$

CALCULATION OF
$S_{N01A}, S_{N01B}$
$S_{NAB0}, S_{NAB1}$

$S_{N01A} : 0?$ — < —

≥

$S_{N01B} : 0?$ — > —

≤

$S_{N01A} : 0?$ — > —

≤

$S_{N01B} : 0?$ — < —

>

$S_{NAB0} : 0?$ — < —

≥

$S_{NAB1} : 0?$ — > —

≤

$S_{NAB0} : 0?$ — > —

≤

$S_{NAB1} : 0?$ — < —

≥

$E_0$ AND $E_A$ INTERFERE WITH EACH OTHER

$E_0$ AND $E_A$ DO NOT INTERFERE WITH EACH OTHER

INTERFERENCE POINT CALCULATOR

RETURN

# FIG. 10

$F_7 (T_0, V_A)$

CALCULATION OF
$S_{N01A}, S_{N12A}, S_{N20A}$

$S_{N01A} : 0?$    <

$\geqq$

$S_{N12A} : 0?$    <

$\geqq$

$S_{N20A} : 0?$    <

$\geqq$

$V_A$ IS INSIDE $T_0$     $V_A$ IS OUTSIDE $T_0$

RETURN

0155183

# FIG. 11

$$F_8(T_0, V_A)$$

CALCULATION OF $S_{A012}$

$S_{A012}:0?$

< $\quad$ > $\quad$ =

BELOW THE PLANE $\quad$ ON THE PLANE $\quad$ ABOVE THE PLANE

RETURN

# FIG. 12

$F_8 (T_0, V_N)$

CALCULATION OF $S_{N012}$

$S_{N012} : 0 ?$

< CONCAVE VERTEX

= $V_0, V_1$ AND $V_2$ ARE ON THE SAME LINE

> CONVEX VERTEX

RETURN

# FIG.13

# FIG.14b

# FIG.14a

0155183

# FIG.15

H

$h_1$

$h_5$ $h_4$ $h_3$ $h_2$

J

$J_1$

$J_3$ $J_2$

# FIG.16a

H

J

# FIG.16b